# FASCICULE DE BREVET EUROPEEN

(11) **EP 1 708 556 B1**
(45) Date de publication et mention de la délivrance du brevet: **30.12.2009**
(21) Numéro de dépôt: 04703193.5
(22) Date de dépôt: 19.01.2004
(51) Int. Cl.: A01D 34/416, B29C 47/00, B29C 69/02, B29C 55/18

(54) **PROCEDE DE FABRICATION DE FILAMENTS DE COUPE DE VEGETAUX ET FILAMENTS DE COUPE DE VEGETAUX**
MÄHFÄDEN UND VERFAHREN ZU IHRER HERSTELLUNG
METHOD FOR THE PRODUCTION OF PLANT CUTTING FILAMENTS AND PLANT CUTTING FILAMENTS

(43) Date de publication de la demande: 11.10.2006
(73) Titulaire: Speed France S.A.S., 69400 Arnas (FR)
(72) Inventeur: LEGRAND, Emmanuel, F-01240 St Germain sur Renon (FR)
(74) Mandataire: Tetaz, Franck Claude Edouard
(86) Numéro de dépôt international: PCT/FR2004/000105
(87) Numéro de publication internationale: WO 2005/077143

(56) Documents cités:
- DE-A- 1 704 986
- DE-C- 19 817 883
- FR-A- 1 319 050
- US-A- 6 045 911
- US-B2- 6 314 848

## Description

La présente invention concerne d'une façon générale les appareils pour couper la végétation tels que les débroussailleuses, coupe-bordures et assimilés, et vise plus particulièrement de nouveaux filaments de coupe pour de tels appareils.

Un filament de coupe est généralement réalisé parextrusion/étirage de polyamide, et l'on a connu depuis quelques années des évolutions significatives de ces filaments : formes adaptées pour réduire le bruit, améliorer l'efficacité de coupe, etc., fils en plusieurs matériaux pour améliorer l'efficacité de coupe, améliorer la biodégradabilité, réduire le coût de revient, etc.

Toutefois, tous les filaments connus restent réalisés à la base par la même technique d'extrusion/étirage dans laquelle, à un stade donné du processus, ou en plusieurs fois, le filament à une température où il présente une viscosité contrôlée est assujetti à une traction longitudinale.

Ceci a pour conséquence de donner aux chaînes moléculaires une orientation moyenne s'étendant dans la direction longitudinale du filament, ceci de manière à lui donner une résistance élevée à la traction et limiter les ruptures au cours du travail.

C'est le cas par exemple de la demande de brevet allemand DE 198 17 883 qui décrit un fil de coupe obtenu dans un polyester biodégradable qui est dégradé par des micro-organismes dans des conditions naturelles. Ce fil de coupe est produit par extrusion suivie d'un étirement.

On connaît également le brevet américain US 6,045,911 qui décrit un filament de coupe pour un appareil de coupe. Le filament est obtenu dans un matériau synthétique par extrusion puis éventuellement par embossage pour former des creux, des ondulations ou des plats le long dudit fil de coupe.

La présente invention vise à offrir aux filaments de coupe de nouvelles possibilités d'amélioration mécanique basées sur une orientation sélective et contrôlée des chaînes moléculaires.

A cet effet et conformément à l'invention, il est proprosé un procédé de fabrication d'un filament de coupe pour appareil de coupe, le filament étant réalisé en matériau synthétique à chaînes moléculaires allongées, comprenant les étapes suivantes :
(a) amener le filament dans un état de viscosité contrôlée,
(b) étirer le filament selon sa longueur pour réaliser une première orientation moléculaire longitudinale,
(c) imposer au filament un changement de section transversale apte à provoquer une réorientation partielle des chaînes moléculaires dans une direction transversale.

Certains aspects préférés, mais non limitatifs, de ce procédé sont les suivantes :
* le procédé comprend en outre l'étape consistant à :
   (d) imposer au filament un deuxième changement de section transversale apte à provoquer une deuxième réorientation partielle des chaînes moléculaires dans une direction transversale.
* le deuxième changement de section transversale s'effectue dans une direction générale sensiblement identique à celle du premier changement de section transversale.
* le deuxième changement de section transversale s'effectue dans une direction générale sensiblement orthogonale à celle du premier changement de section transversale.
* le deuxième changement de section transversale s'effectue partiellement dans une direction générale sensiblement identique à celle du premier changement de section transversale et partiellement dans une direction générale sensiblement orthogonale à celle du premier changement de section transversale.
* le filament présente, avant la mise en oeuvre de l'étape (c), une section transversale régulière dont les dimensions dans deux directions orthogonales sont voisines.
* l'étape (c) comprend un aplatissement du filament.
* l'étape (d) comprend un aplatissement au moins local du filament.
* l'étape (c) comprend un aplatissement localisé et un épaississement localisé du filament.
* le changement de section transversale, ou au moins le dernier changement de section transversale, du filament est apte à former un filament comprenant un corps et au moins une aile faisant saillie à partir du corps.
* le changement de section transversale du filament, ou au moins l'un des changements de section transversale, comprend le passage à force du filament à travers une série de filières de sections progressivement différentes.
* le changement de section transversale du filament, ou au moins l'un des changements de section transversale, comprend le passage à force du filament à travers une filière unique à section variable.
* le procédé comprend en outre une étape de sectionnement du filament dont la section a été changée en une pluralité de sous-filaments individuels dans la direction longitudinale du filament.

Selon un deuxième aspect, l'invention propose un filament de coupe pour un appareil de coupe de végétation tel que débroussailleuse ou coupe-bordures, le filament étant réalisé en un matériau synthétique à chaînes moléculaires allongées tel qu'un polyamide, dans lequel dans le corps du filament les chaînes moleculaires sont orientées essentiellement dans la direction longitudinale du filament et caractérisé en ce que, dans au moins une zone de la section transversale du filament, l'orientation des chaînes moléculaires s'écarte d'une orientation longitudinale.

Certains aspects préférés, mais non limitatifs, de ce filament sont les suivants :
* le filament comprend un corps et au moins une aile en saillie à partir du corps, et ladite aile constitue une zone dans laquelle l'orientation des chaînes moléculaires s'écarte d'une orientation longitudinale.
* l'aile présente une section transversale généralement triangulaire.
* dans le corps du filament, les chaînes moléculaires sont orientées essentiellement dans la direction longitudinale du filament.
* sur l'essentiel de sa section transversale, il existe des chaînes moléculaires orientées longitudinalement et des chaînes moléculaires orientées généralement dans une direction transversale donnée.
* sur l'essentiel de sa section transversale, il existe des chaînes moléculaires orientées longitudinalement, des chaînes moléculaires orientées généralement dans une première direction transversale donnée et des chaînes moléculaires orientées généralement dans une deuxième direction transversale donnée.
* les première et deuxième directions transversales sont essentiellement orthogonales entre elles.

D'autres aspects, buts et avantages de la présente invention apparaîtront mieux à la lecture de la description détaillée suivante de formes de réalisation préférées de celle-ci, donnée à titre d'exemple non limitatif et faite en référence aux dessins annexés, sur lesquels :
- la figure 1 est une vue en perspective d'un filament de coupe selon l'art antérieur,
- la figure 2 est une vue en perspective d'un filament de coupe selon un exemple de réalisation de l'invention,
- la figure 3 illustre l'évolution d'un filament en termes de section transversale et d'orientation moléculaire au cours de la mise en oeuvre d'un procédé de fabrication selon la présente invention, et
- les figures 4 à 6 illustrent trois exemples de mises en oeuvre d'un procédé de fabrication selon la présente invention.

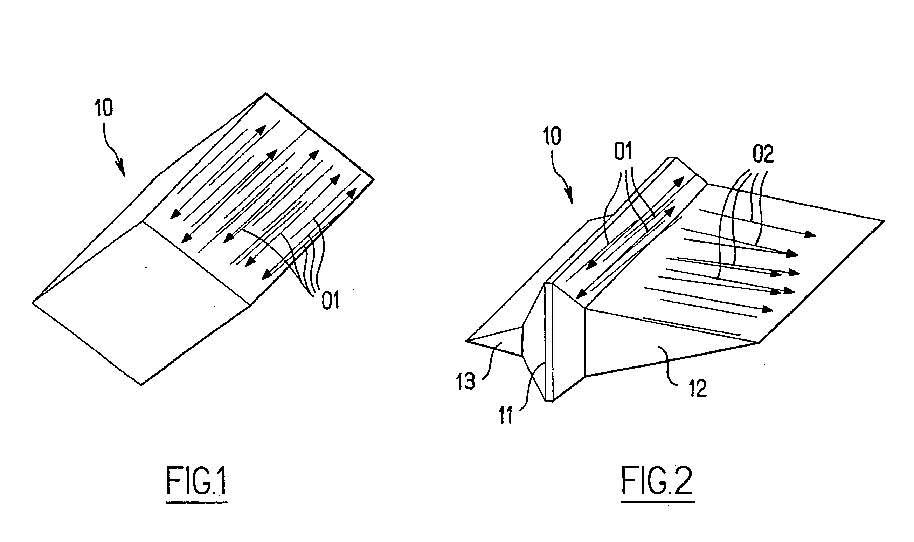

En référence tout d'abord à la figure 1, on a représenté un filament de coupe 10 pour débroussailleuse, coupe-bordures ou analogue, qui présente en l'espèce une section transversale carrée, ou légèrement en losange aplati. Il est réalisé ici en polyamide 6 (PA6).

Ce filament a été fabriqué par un procédé conventionnel d'extrusion/étirage, où le filament, dans un état de viscosité donné (déterminé en pilotant sa température), a subi un étirage longitudinal dans un rapport d'étirage déterminé, de telle sorte que les chaînes moléculaires de polyamide ont adopté majoritairement une orientation01 dans la direction longitudinale du filament.

Ce procédé conventionnel permet d'obtenir des filaments de coupe qui, du fait de cette orientation moléculaire, présentent une excellente résistance à la traction, et donc au sectionnement lors du travail de coupe des végétaux.

La figure 2 illustre un filament de coupe réalisé selon l'invention. Dans ce filament, on trouve une partie de corps 11 et deux ailes 12, 13 situées latéralement de part et d'autre du corps.

Par un procédé tel qu'on va le détailler plus loin, le filament présente :
- dans sa région centrale, principalement au niveau de du corps 11, une orientation moléculaire longitudinale 01, de la même manière que dans le filament 10 de l'art antérieur montré en figure 1 ;
- dans la région d'au moins l'une de ses ailes (ici l'aile 12 la plus proéminente), une orientation moléculaire 02 qui est majoritairement orientée transversalement à la direction longitudinale du filament.

Ainsi, grâce à cette double orientation, le filament de coupe présente des propriétés mécaniques améliorées, avec une région de coupe de végétaux dotée d'une orientation moléculaire majoritairement transversale, donc une meilleure résistance à l'usure par arrachement transversal de la matière du filament, et une région de corps conservant une orientation moléculaire majoritairement longitudinale, pour conserver globalement une bonne résistance à la traction.

On observera ici qu'au niveau de l'aile opposée 13, on peut trouver une orientation moléculaire intermédiaire entre les orientations longitudinale et transversale.

On observera également que la partie de travail 12 du filament peut être dotés d'aménagements (dents, revêtement spécifique anti-usure, etc.) destinés à améliorer les propriétés du filament notamment en matière d'efficacité de coupe.

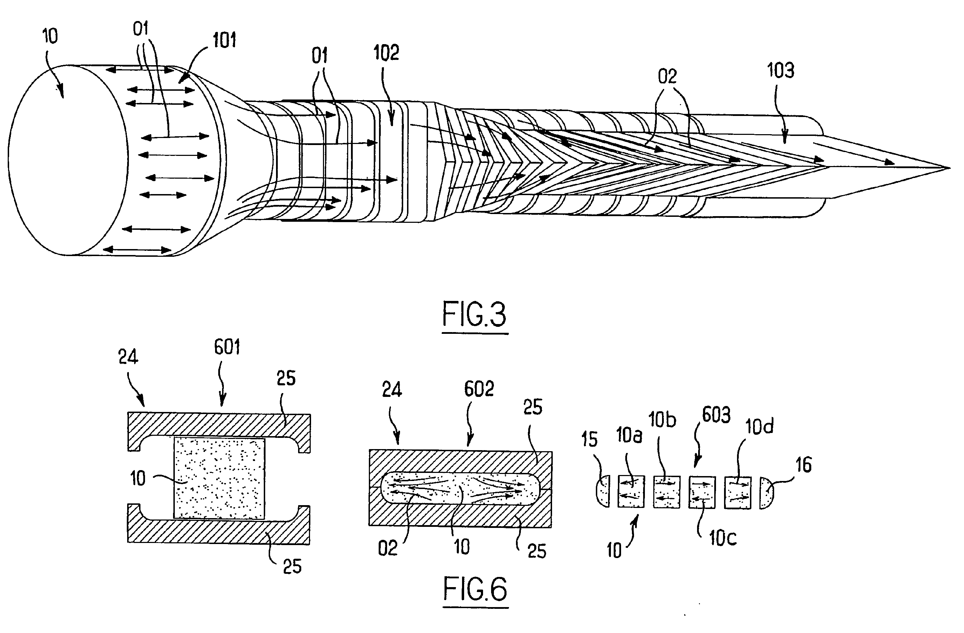

La figure 3 illustre le comportement du filament au cours de la mise en oeuvre d'un procédé selon la présente invention.

Un procédé conventionnel d'extrusion/étirage avec filière circulaire a permis d'aboutir à un filament de coupe tel qu'illustré dans sa phase 101, avec une section transversale circulaire et une orientation moléculaire majoritairement longitudinale 01.

Grâce à un jeu de filières réalisant une sorte de malaxage du filament encore à l'état visqueux, on aboutit dans la phase 102 à un filament de section généralement carrée à coins arrondis, où l'orientation moléculaire, bien que restant majoritairement longitudinale, a commencé s'écarter de cette direction. Un nouveau jeu de filières assure la transformation de la section transversale du filament de sa phase généralement carrée jusqu'à une phase 103 qui est par exemple celle correspondant au produit final de la figure 2.

Au cours de cette opération, et compte-tenu en particulier de la désorientation commencée à l'étape précédente et de l'épaisseur limitée de l'aile latérale 12 du filament, les chaînes moléculaires dans cette région ont pris une orientation majoritairement transversale 02 résultant du fluage progressif de la matière du filament vers cette région.

On obtient ainsi un filament correspondant à celui de la figure 2.

On observera ici qu'en lieu et place d'un jeu de filières de section constante amenant pas à pas la section transversale du filament d'une forme à une autre, on peut prévoir des filières de section évolutive pour aboutir essentiellement au même type de résultat.

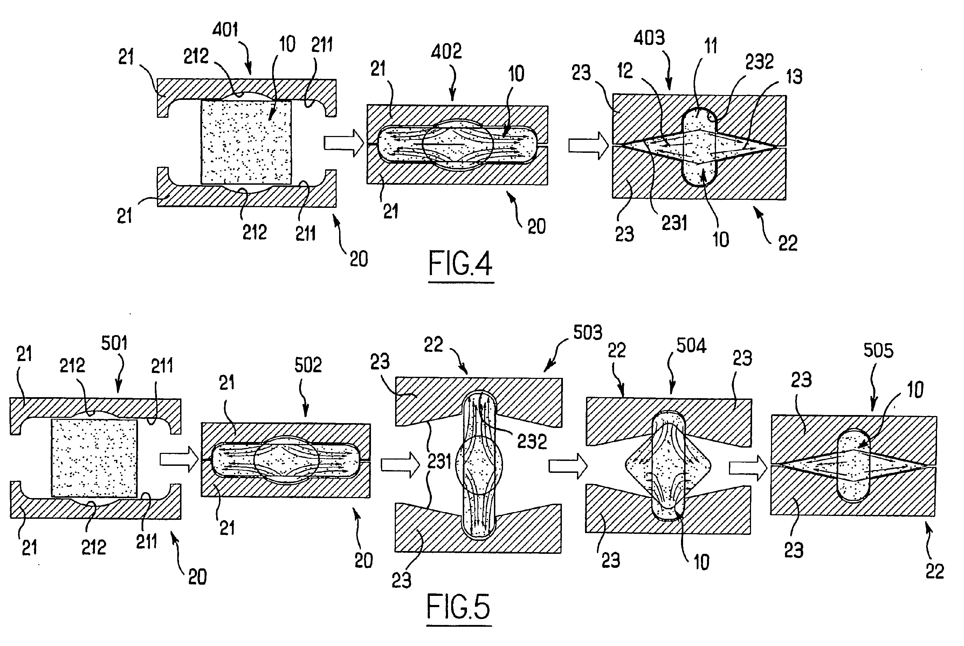

La figure 4 illustre une première mise en oeuvre concrète d'un procédé selon la présente invention.

Le point de départ est un filament 10 de section transversale carrée, obtenu par un procédé classique d'extrusion/étirage, avec par conséquent une orientation moléculaire 01 majoritairement longitudinale.

Ce filament présente par exemple une section de 4,5 x 4,5 mm.

A l'étape 401, ce fil pénètre dans une filière 20 en deux parties 21,21 réalisées identiquement et dont l'une est la symétrique de l'autre par rapport à un plan horizontal médian.

Ainsi chaque partie de filière possède une surface principale de travail 211 sensiblement plane, au milieu de laquelle est formé un léger renfoncement circulaire 212.

L'espacement entre les deux parties 21,21 est initialement tel que la distance entre les surfaces de travail en vis-à-vis est sensiblement égale à la hauteur du filament 10.

Ces deux parties de la filière sont placées sur la chaîne de fabrication pour se rapprocher progressivement l'une de l'autre, jusqu'à aboutir à la situation correspondant à l'étape 402. Entre les étapes 401 et 402, le filament dans un état de viscosité contrôlée a été comprimé verticalement, provoquant un fluage latéral de sa matière et donc une réorientation transversale partielle (ou oblique) des chaînes moléculaires du polyamide 6. Dans le présent exemple, les dimensions générales du passage défini par la filière à l'étape 402 sont d'environ 1,75 x 8 mm.

La section du filament est ensuite travaillée à nouveau pour passer de la filière illustrée à l'étape 402 jusqu'à une filière 22 telle qu'illustrée en liaison avec l'étape 403, soir par pas, soit de façon progressive dans une filière à géométrie variable.

La filière 22 comporte ici encore deux parties identiques23, 23, symétriques par rapport à un plan horizontal médian, avec un renfoncement en V aplati 231 sur toute la largeur et, au fond de ce V aplati, un canal 232 plus étroit, à fond semi-circulaire.

Cette forme provoque d'une part à un amincissement des régions latérales du filament vers une forme triangulaire, et d'autre part à un épaississement de sa région centrale (dont les dimensions sont d'environ 4 x 1,75 mm dans le présent exemple).

Ceci a pour effet d'accentuer encore l'orientation transversale 02 donnée aux chaînes moléculaires de polyamide dans les régions latérales du filament. Dans le même temps, on observe que la région centrale du filament a subi d'une part, de l'étape 401 à l'étape 402, un aplatissement horizontal puis, de l'étape 402 à l'étape 403, un aplatissement en direction verticale, ce qui a pour effet de créer dans cette région un multi- orientation moléculaire propice à la résistance mécanique du filament non seulement dans sa direction longitudinale mais également dans toutes les directions transversales.

Ceci permet en particulier de réduire, voire de supprimer, les phénomènes d'effilochement du filament de coupe à son extrémité libre.

On a illustré sur la figure 5 un deuxième exemple de mise en oeuvre du procédé selon l'invention, qui vise à réaliser un filament de coupe ayant le même contour que dans l'exemple précédent mais avec des propriétés encore améliorées.

Dans cet exemple, les étapes 501 et 502 sont identiques aux étapes 401 et 402 de l'exemple précédent. A l'issue de l'étape 502, le filament subit une rotation sur90 avant d'être engagé dans une filière 22 identique à celle décrite en référence à la figure 4, mais dont les deux éléments ont été espacés davantage pour pouvoir recevoir le filament aplati, orienté alors verticalement (étape 503).

En variante, le filament 10 garde son orientation mais la filière 22 est tournée de 90 par rapport à l'illustration de la figure 5.

Les deux parties de la filière 22 sont alors progressivement rapprochées (étapes 504 et 505) pour ainsi travailler le filament dans une direction perpendiculaire à celle dans laquelle il a été travaillé entre les étapes 501 et 502. A titre d'exemple, la hauteur totale du filament passe d'environ 8 mm (étape 503) à environ 4 mm (étape 505).

Le filament obtenu à la fin de l'étape 505 présente, en termes de contours, la même forme que celui obtenu à la fin de l'étape 403 de la figure 4, la différence essentielle était le fait qu'il subi un double amincissement, dans deux directions orthogonales (sachant qu'en variante, on peut prévoir deux directions obliques l'une par rapport à l'autre).

La multi-orientation des molécules de polyamide est ainsi accentuée.

La figure 6 illustre une autre forme de réalisation de l'invention, qui utilise une filière 24 à deux éléments 25 possédant des surfaces planes en vis-à-vis 251.

A l'étape 601, un filament 10 de section généralement carrée est reçu entre les deux parties 25 de la filière 24. Entre les étapes 601 et 602, les deux parties de la filière sont rapprochées, pour aboutir à un filament généralement plat, dont l'épaisseur est par exemple comprise entre 2 et 4 mm, et dont la largeur est typiquement égale à plusieurs fois cette épaisseur. Au cours de cette opération, l'orientation des chaînes moléculaires s'est en partie transformée en une orientation latérale 02, comme illustré à l'étape 602.

A l'étape 603, le filament aplati, après être sorti de la filière 24, est découpé à l'aide de lames appropriées (non représentées) en une pluralité de filaments ayant la même hauteur, mais une largeur réduite. Dans le présent exemple, on obtient à cette étape quatre filaments individuels 10a à 10d, d'une section transversale généralement carrée. Les petites parties terminales 15 et 16 sont mises au rebut ou recyclées.

Dans chaque filament, les chaînes moléculaires présentent une orientation qui n'est plus uniquement longitudinale. On assure ainsi de meilleures propriétés mécaniques, notamment une moindre tendance à l'effilochage, sans dégrader de façon indésirable la résistance à la traction en direction longitudinale.

Selon une variante (non représentée) de cette forme de réalisation, on peut réaliser un premier aplatissement du fil comme à l'étape 602, et un second aplatissement dans une direction orthogonale (dans le même esprit que dans le mode d'exécution de la figure 5), de manière à accentuer encore la désorientation des chaînes moléculaires de polyamide en effectuant cette désorientation selon une direction supplémentaire.

On notera ici que les filaments de section carrée obtenus à l'étape 603 peuvent soit être conditionnés pour une commercialisation en l'état, soit subir tous autres traitements, et notamment des traitements de mise en forme (formation de dents de coupe, etc. ), de revêtement, etc.

Bien entendu, la présente invention n'est nullement limitée aux formes de réalisation décrites ci-dessus et représentées sur les dessins, mais l'homme du métier saura y apporter de nombreuses variantes et modifications.

En particulier, on comprend que l'invention peut être combinée par l'homme du métier avec de nombreuses autres améliorations généralement connues dans le domaine des filaments de coupe (filaments de forme particulière et/ou poly-matériaux pour améliorer l'efficacité de coupe, réduire le bruit e fonctionnement, améliorer la biodégradabilité, éviter les phénomènes de collage, etc.)

## Revendications

1. Procédé de fabrication d'un filament de coupe pour appareil de coupe de végétation tel que débroussailleuse ou coupe-bordures, le filament étant réalisé en matériau synthétique à chaînes moléculaires allongées, comprenant les étapes suivantes : (a) amener le filament (10) dans un état de viscosité contrôlée, (b) étirer le filament selon sa longueur pour réaliser une première orientation moléculaire longitudinale(01), (c) imposer au filament un changement de section transversale apte à provoquer une réorientation partielle des chaînes moléculaires dans une direction transversale (02).

2. Procédé selon la revendication 1, **caractérisé en ce qu'**il comprend en outre l'étape consistant à : (d) imposer au filament un deuxième changement de section transversale apte à provoquer une deuxième réorientation partielle des chaînes moléculaires dans une direction transversale.

3. Procédé selon la revendication 2, **caractérisé en ce que** le deuxième changement de section transversale s'effectue dans une direction générale sensiblement identique à celle du premier changement de section transversale.

4. Procédé selon la revendication 2, **caractérisé en ce que** le deuxième changement de section transversale s'effectue dans une direction générale sensiblement orthogonale à celle du premier changement de section transversale.

5. Procédé selon la revendication 2, **caractérisé en ce que** le deuxième changement de section transversale s'effectue partiellement dans une direction générale sensiblement identique à celle du premier changement de section transversale et partiellement dans une direction générale sensiblement orthogonale à celle du premier changement de section transversale.

6. Procédé selon l'une des revendications 1 à 5, **caractérisé en ce que** le filament présente, avant la mise en oeuvre de l"étape (c), une section transversale régulière dont les dimensions dans deux directions orthogonales sont voisines.

7. Procédé selon la revendication 6, **caractérisé en ce que** l'étape (c) comprend un aplatissement du filament.

8. Procédé selon les revendications 2,6 et 7 prises en combinaison, **caractérisé en ce que** l'étape (d) comprend un aplatissement au moins local du filament.

9. Procédé selon la revendication8, **caractérisé en ce que** l'étape (c) comprend un aplatissement localisé et un épaississement localisé du filament.

10. Procédé selon l'une des revendications 1 à 9, **caractérisé en ce que** le changement de section transversale, ou au moins le dernier changement de section transversale, du filament est apte à former un filament comprenant un corps et au moins une aile faisant saillie à partir du corps.

11. Procédé selon l'une des revendications 1 à 10, **caractérisé en ce que** le changement de section transversale du filament, ou au moins l'un des changements de section transversale, comprend le passage à force du filament à travers une série de filières de sections progressivement différentes.

12. Procédé selon l'une des revendications 1 à 10, **caractérisé en ce que** le changement de section transversale du filament, ou au moins l'un des changements de section transversale, comprend le passage à force du filament à travers une filière unique à section variable.

13. Procédé selon l'une des revendications 1 à 12, **caractérisé en ce qu'**il comprend en outre une étape de sectionnement du filament dont la section a été changée en une pluralité de sous-filaments individuels dans la direction longitudinale du filament.

14. Filament de coupe (10) pour un appareil de coupe de végétation tel que débroussailleuse ou coupe-bordures, le filament étant réalisé en un matériau synthétique à chaînes moléculaires allongées tel qu'un polyamide, dans lequel dans le corps (11) du filament, les chaînes moléculaires sont orientées essentiellement dans la direction longitudinale (01) du filament et **caractérisé en ce que**, dans au moins une zone de la section transversale du filament, l'orientation (02) des chaînes moléculaires s'écarte d'une orientation longitudinale(01).

15. Filament de coupe selon la revendication 14, **caractérisé en ce qu'**il comprend un corps (11) et au moins une aile (12,13) en saillie à partir du corps, et **en ce que** ladite aile constitue une zone dans laquelle l'orientation des chaînes moléculaires s'écarte d'une orientation longitudinale.

16. Filament selon la revendication 15, **caractérisé en ce que** l'aile (12,13) présente une section transversale généralement triangulaire.

17. Filament de coupe selon la revendication 14, **caractérisé en ce que** sur l'essentiel de sa section transversale, il existe des chaînes moléculaires orientées longitudinalement et des chaînes moléculaires orientées généralement dans une direction transversale donnée.

18. Filament de coupe selon la revendication 14, **caractérisé en ce que** sur l'essentiel de sa section transversale, il existe des chaînes moléculaires orientées longitudinalement, des chaînes moléculaires orientées généralement dans une première direction transversale donnée et des chaînes moléculaires orientées généralement dans une deuxième direction transversale donnée.

19. Filament selon la revendication 18, **caractérisé en ce que** les première et deuxième directions transversales sont essentiellement orthogonales entre elles.

## Claims

1. A method for producing a cutting filament for a plant cutting apparatus such as a brush cutter or a edge trimmer, the filament being made in a synthetic material with elongated molecular chains, comprising the following steps: (a) bringing the filament (10) into a controlled viscosity condition, (b) drawing the filament in its length in order to produce a first longitudinal molecular orientation (01), (c) imposing to the filament a change in cross-section capable of causing partial reorientation of the molecular chains in a transverse direction (02).

2. The method according to claim 1, **characterized in that** it further comprises the step consisting of: (d) imposing to the filament a second change in cross-section capable of causing a second partial reorientation of the molecular chains in a transverse direction.

3. The method according to claim 2, **characterized in that** the second change in cross-section is carried out in a general direction substantially identical with that of the first change in cross-section.

4. The method according to claim 2, **characterized in that** said change in cross-section is carried out in a general direction substantially orthogonal to that of the first change in cross-section.

5. The method according to claim 2, **characterized in that** the second change in cross-section is partially carried out in a general direction substantially identical with the one of the first change in cross-section and partially in a general direction substantially orthogonal to the one of the first change in cross-section.

6. The method according to any of claims 1 to 5, **characterized in that** the filament before applying step (c) has a regular cross-section, the dimensions of which in two orthogonal directions are close to each other.

7. The method according to claim 6, **characterized in that** step (c) comprises flattening of the filament.

8. The method according to claim 2, 6 and 7, taken as a combination, **characterized in that** step (d) comprises at least local flattening of the filament.

9. The method according to claim 8, **characterized in that** step (c) comprises localized flattening and localized flattening of the filament.

10. The method according to any of claims 1 to 9, **characterized in that** the change in cross-section, or at least the last change in cross-section, of the filament is capable of forming a filament comprising a body and at least one wing protruding from the body.

11. The method according to any of claims 1 to 10, **characterized in that** the change in cross-section of the filament, or at least one of the changes in cross-section, comprises the forced passage of the filament through a series of dies with gradually different sections.

12. The method according to any of claims 1 to 10, **characterized in that** the change in the cross-section of the filament, or at least one of the changes in cross-section, comprises the forced passage of the filament through a single die with variable section.

13. The method according to any of claims 1 to 12, **characterized in that** it further comprises a step for severing the filament, the section of which has been changed into a plurality of individual sub-filaments in the longitudinal direction of the filament.

14. A cutting filament (10) for a plant cutting apparatus such as a brush cutter or edge trimmer, the filament being made in a synthetic material with elongated molecular chains such as a polyamide, wherein in the body (11) of the filament, the molecular chains are substantially oriented in the longitudinal direction (01) of the filament and **characterized in that** in at least one area of the cross-section of the filament, the orientation (02) of the molecular chains deviates from a longitudinal orientation (01).

15. The cutting filament according to claim 14, **characterized in that** it comprises a body (11) and at least one wing (12, 13) protruding from the body, and **in that** said wing is an area in which the orientation of the molecular chains deviate from a longitudinal orientation.

16. The filament according to claim 15, **characterized in that** the wing (12, 13) has a generally triangular cross-section.

17. The cutting filament according to claim 14, **characterized in that** on the main part of its cross-section, there are molecular chains oriented longitudinally and molecular chains generally oriented in a given transverse direction.

18. The cutting filament according to claim 14, **characterized in that** on the main part of its cross-section, there are molecular chains oriented longitudinally, molecular chains generally oriented in a first given transverse direction and molecular chains generally oriented in a second given transverse direction.

19. The filament according to claim 18, **characterized in that** the first and second transverse directions are essentially orthogonal to each other.

## Patentansprüche

1. Verfahren zur Herstellung eines Mähfadens für Pflanzenwuchs-Mähgerät wie Gestrüppentferner oder Rasenkantenschneider, wobei der Faden aus langkettig-molekularem synthetischem Material hergestellt ist, das die folgenden Schritte umfasst: (a) Überführung des Fadens (10) in einen Zustand kontrollierter Viskosität, (b) Längsausdehnung des Fadens, um eine erste molekulare Längsausrichtung (01) durchzuführen, (c) Zwang des Fadens zu einem Querschnittswechsel, der imstande ist, eine teilweise Neuausrichtung der Molekülketten in eine transversale Richtung (02) hervorzurufen.

2. Verfahren nach Anspruch 1, **dadurch gekennzeichnet, dass** es weiterhin den Schritt umfasst, der darin besteht, (d) den Faden zu einem zweiten Querschnittswechsel zu zwingen, der imstande ist, eine zweite teilweise Neuausrichtung der Molekülketten in eine transversale Richtung hervorzurufen.

3. Verfahren nach Anspruch 2, **dadurch gekennzeichnet, dass** die zweite transversale Querschnittsänderung in eine allgemeine Richtung erfolgt, die etwa mit der der ersten transversalen Querschnittsänderung identisch ist.

4. Verfahren nach Anspruch 2, **dadurch gekennzeichnet, dass** die zweite transversale Querschnittsänderung in eine allgemeine Richtung erfolgt, die zu der der ersten transversalen Querschnittsänderung etwa orthogonal ist.

5. Verfahren nach Anspruch 2, **dadurch gekennzeichnet, dass** die zweite transversale Querschnittsänderung teilweise in eine allgemeine Richtung erfolgt, die etwa mit der der ersten transversalen Querschnittsänderung identisch ist und teilweise in eine allgemeine Richtung, die zu der der ersten transversalen Querschnittsänderung etwa orthogonal ist.

6. Verfahren nach Anspruch 1 bis 5, **dadurch gekennzeichnet, dass** der Faden vor Umsetzung des Schritts (c) einen gleichmäßigen Querschnitt aufweist, dessen Abmessungen in zwei orthogonale Richtungen ähnlich sind.

7. Verfahren nach Anspruch 6, **dadurch gekennzeichnet, dass** der Schritt (c) eine Abflachung des Fadens umfasst.

8. Verfahren nach den in Kombination herangezogenen Ansprüchen 2, 6 und 7, **dadurch gekennzeichnet, dass** der Schritt (d) eine zumindest lokale Abflachung des Fadens umfasst.

9. Verfahren nach Anspruch 8, **dadurch gekennzeichnet, dass** der Schritt (c) eine lokalisierte Abflachung und eine lokalisierte Verdickung des Fadens umfasst.

10. Verfahren nach einem der Ansprüche 1 bis 9, **dadurch gekennzeichnet, dass** der transversale Querschnittswechsel oder zumindest der letzte transversale Querschnittswechsel des Fadens imstande ist, einen Faden zu formen, der einen Körper und mindestens einen Flügel umfasst, der vom Körper absteht.

11. Verfahren nach einem der Ansprüche 1 bis 10, **dadurch gekennzeichnet, dass** der transversale Querschnittswechsel des Fadens oder zumindest einer der transversalen Querschnittswechsel das Durchtreiben des Fadens durch eine Reihe von Düsen mit schrittweise unterschiedlichen Querschnitten umfasst.

12. Verfahren nach einem der Ansprüche 1 bis 10, **dadurch gekennzeichnet, dass** der transversale Querschnittswechsel des Fadens oder zumindest einer der transversalen Querschnittswechsel das Durchtreiben des Fadens durch eine einzige Düse mit variablem Querschnitt umfasst.

13. Verfahren nach einem der Ansprüche 1 bis 12, **dadurch gekennzeichnet, dass** es weiterhin einen Schritt der Unterteilung des Fadens umfasst, dessen Querschnitt in eine Vielzahl individueller Unterfäden in Längsrichtung des Fadens geändert wurde.

14. Mähfaden (10) für ein Pflanzenwuchs-Mähgerät wie Gestrüppentferner oder Rasenkantenschneider, wobei der Faden aus einem langkettig-molekularem synthetischem Material wie ein Polyamid hergestellt ist, wobei die Molekülketten im Körper (11) des Fadens im wesentlichen in Längsrichtung (01) des Fadens ausgerichtet sind und **dadurch gekennzeichnet, dass** sich die Ausrichtung (02) der Molekülketten in mindestens einem Bereich des transversalen Querschnitts des Fadens von einer Längsausrichtung (01) entfernt.

15. Mähfaden nach Anspruch 14, **dadurch gekennzeichnet, dass** er einen Körper (11) und mindestens einen Flügel (12, 13) umfasst, der vom Körper absteht, und **dadurch**, dass der Flügel einen Bereich darstellt, in sich dem die Ausrichtung der Molekülketten von einer Längsausrichtung entfernt.

16. Mähfaden nach Anspruch 15, **dadurch gekennzeichnet, dass** der Flügel (12, 13) einen im allgemeinen dreieckigen Querschnitt aufweist.

17. Mähfaden nach Anspruch 14, **dadurch gekennzeichnet, dass** es im Kernbereich seines transversalen Querschnitts Molekülketten gibt, die längs ausgerichtet sind und Molekülketten, die im allgemeinen in eine bestimmte transversale Richtung ausgerichtet sind.

18. Mähfaden nach Anspruch 14, **dadurch gekennzeichnet, dass** es im Kernbereich seines transversalen Querschnitts Molekülketten gibt, die längs ausgerichtet sind, Molekülketten, die im allgemeinen in eine bestimmte erste transversale Richtung und Molekülketten, die im allgemeinen in eine bestimmte zweite transversale Richtung ausgerichtet sind.

19. Mähfaden nach Anspruch 18, **dadurch gekennzeichnet, dass** die erste und zweite transversale Richtung im wesentlichen orthogonal zueinander sind.
